# EUROPÄISCHE PATENTSCHRIFT

(11) **EP 1 625 928 B1**
(45) Veröffentlichungstag und Bekanntmachung des Hinweises auf die Patenterteilung: **19.03.2008**
(21) Anmeldenummer: 05109238.5
(22) Anmeldetag: 07.12.2002
(51) Int. Cl.: B29C 45/18, B29C 45/77, B29C 45/54

(54) **Regelung für einen Spritzgieß-Compounder**
Control of an injection-compounding machine
Contrôle d'une presse à injecter avec mélangeur

(30) Priorität: 21.12.2001 DE 10163409
(43) Veröffentlichungstag der Anmeldung: 15.02.2006
(62) Teilanmeldung aus: 02027335.5
(73) Patentinhaber: KraussMaffei Technologies GmbH, 80997 München (DE)
(72) Erfinder: Wobbe, Hans, 82211, Herrsching (DE)
(74) Vertreter: Wilhelm, Ludwig

(56) Entgegenhaltungen:
- EP-A- 0 946 348
- US-A- 4 678 420
- PATENT ABSTRACTS OF JAPAN Bd. 1996, Nr. 05, 31. Mai 1996 (1996-05-31) -& JP 08 011160 A (DAIKYO INC), 16. Januar 1996 (1996-01-16)
- PATENT ABSTRACTS OF JAPAN Bd. 2000, Nr. 15, 6. April 2001 (2001-04-06) & JP 2000 334775 A (GE TOSHIBA SILICONES CO LTD), 5. Dezember 2000 (2000-12-05)
- PATENT ABSTRACTS OF JAPAN Bd. 017, Nr. 507 (M-1479), 13. September 1993 (1993-09-13) & JP 05 131509 A (TOSHIBA MACH CO LTD), 28. Mai 1993 (1993-05-28)

## Beschreibung

Die Erfindung bezieht sich auf ein Regel- bzw. Steuerverfahren für einen Spritzgieß-Compounder.

Spritzgieß-Compounder sind Vorrichtungen zum Herstellen von Kunststoffartikeln und bestehen im wesentlichen aus einer Plastifiziereinheit mit einer darin angeordneten Schnecke, wobei der Plastifiziereinheit über eine oder mehrere Dosiervorrichtungen als Zuschlagsstoffe Kunststoffgranulat, Fasermaterialien und andere Zuschlagsstoffe zugeführt werden. Diese Materialien werden durch Drehung der Schnecke oder der Schnecken plastifiziert und in Längsrichtung der Plastifiziereinheit einem Kopf zugeführt, aus dem sie in ein Einspritzaggregat in Form einer Kolben-Zylinder-Anordnung gelangen. Mittels des Einspritzaggregats wird das so plastifizierte und erhitzte Kunststoffmaterial in ein Formwerkzeug zur Ausbildung der Kunststoffartikel eingespritzt.

Üblicherweise werden die Kunststoffgranulate und dergleichen über Seitendosierungen oder Einfülltrichter der Plastifiziereinheit kontinuierlich oder in Zeitabständen oder abhängig vom Füllungsstand der Plastifiziereinheit zugeführt. Dabei kann es abhängig von den Betriebsbedingungen zu Über- oder Unterdosierungen kommen, und bei der Umstellung auf die Fertigung eines neuen Artikels müssen neue Dosiermengen eingestellt werden.

Das Dokument JP 05131509 offenbart ein Verfahren gemäß dem Oberbegriff des Anspruchs 1.

In der JP 62198417 ist ein Verfahren zur automatischen Versorgung einer Einspritzeinrichtung mit Material beschrieben, wobei die Einspritzmenge durch die vorderste und die rückwärtigste Position einer vor- und zurück verfahrbaren Schnecke ermittelt wird. Mit der so ermittelten Einspritzmenge wird Material abgewogen und einer Einfülleinrichtung für den nächsten Aufschmelzvorgang zugeführt.

Aus der JP 2000334775 ist eine Spritzgießeinrichtung bekannt, die einen statischen Mischer sowie eine Zylinder-Kolben-Einspritzeinrichtung umfasst. Der statische Mischer hat auf den Befüllvorgang der Zylinder-Kolben-Einspritzeinrichtung keinen Einfluss und wirkt diesbezüglich wie eine Drossel. Aus diesem Grunde übernimmt ein Ausgangsmaterialversorgungs-System die Rolle der aktiven Befüllung der Zylinder-Kolben-Einspritzeinrichtung. Um die korrekte Befüllung der Zylinder-Kolben-Einspritzeinrichtung zu gewährleisten, muss der Betrieb des Ausgangsmaterialversorgungs-Systems gesteuert werden. Dies wird in der JP 2000334775 durch eine Kombination von 3 Drucksensoren, erreicht, welche an der Innenwand der Zylinder-Kolben-Einspritzeinrichtung, am Auslass des statischen Mischers und auf der Auslassseite des Ausgangsmaterialversorgungs-Systems angeordnet sind. Auf der Grundlage der von diesen Sensoren abgegebenen Signale wird das Ausgangsmaterialversorgungs-Systems gesteuert.

In der US 2001/0048181 sind verschiedene Ausführungsformen einer Vorrichtung zur Herstellung von verstärkten thermoplastischen Composit-Materialien dargestellt und beschrieben. Manche Ausführungsformen beinhalten einen Einwellenextruder, einen Doppelwellenextruder und eine Kolben-Zylinder-Einspritzeinrichtung. In die Doppelwellenextruder wird ein Verstärkungsmaterial einer Schmelze zugeführt und kompoundiert. Das so kompoundierte Material wird diskontinuierlich der Kolben-Zylinder-Einspritzeinrichtung zugeführt und von dort in eine Werkzeugform eingebracht.

Der Erfindung liegt die Aufgabe zugrunde, ein Verfahren zum Steuern bzw. Regeln eines oben bezeichneten Spritzgieß-Compounders anzugeben bei denen Fehldosierungen weitgehend vermieden werden können und bei denen bei einem Artikelwechsel abweichende Dosierungen nicht eingestellt werden müssen.

Die Lösung dieser Aufgabe erfolgt durch ein Verfahren gemäß Patentanspruch 1; die abhängigen Ansprüche betreffen vorteilhafte Weiterentwicklungen der Erfindung.

Bei einem erfindungsgemäßen Regelverfahren wird der Druck im Kopf des Compounders bzw. der Plastifiziereinheit ermittelt und als Führungsgröße zur Ansteuerung der Dosiervorrichtung verwendet. Ein zu hoher Druck im Kopf der Plastifiziereinheit zeigt an, dass eine zu große Menge an Zuschlagsstoffen zugeführt wurde, ein zu geringer Druck zeigt an, dass eine zu geringe Menge an Zuschlagsstoffen zugeführt wurde. Dementsprechend wird der Dosierstrom der Dosiervorrichtung umgekehrt proportional zur Änderung des Druckes verändert.

Der erfindungsgemäßen Verfahren eignen sich auch zur gleichzeitigen Steuerung bzw. Regelung mehrerer Dosiervorrichtungen, die dieselbe Plastifiziereinheit beschicken.

## Patentansprüche

1. Verfahren zum Regeln der Zufuhrmengen von Zuschlagstoffen für einen Spritzgieß-Compounder, wobei mehrere Zuschlagstoffe in den Spritzgieß-Compounder zugeführt werden, mit
- einer eine drehbare Plastifizierschnecke aufweisenden Plastifiziereinheit,
- einem Einspritzaggregat und
- einer Dosiervorrichtung zur Zuführung von den Zuschlagstoffen,
**dadurch gekennzeichnet,**
**dass** der Druck im Kopf der Plastifiziereinheit ermittelt wird und dass die Dosiervorrichtung abhängig vom Druck betrieben wird.

2. Verfahren nach Anspruch 1,
**dadurch gekennzeichnet,**
**dass** der Dosierstrom der Dosiervorrichtung umgekehrt proportional zu Änderungen des Drucks verändert wird.

3. Verfahren nach einem der Ansprüche 1 bis 2,
**dadurch gekennzeichnet,**
**dass** meherere Dosiervorrichtungen gleichzeitig nach einem Verfahren, wie in den Ansprüchen 1 bis 2 genannt, gesteuert oder geregelt werden.

## Claims

1. A method for controlling the amounts of additives supplied for an injection compounding machine, wherein a plurality of additives are supplied to the injection compounding machine, comprising
- a plasticizing unit having a rotatable plasticizing screw,
- an injection unit and
- a metering device for supplying additives, **characterised in that** the pressure in the head of the plasticizing unit is determined and the metering device is operated depending on the pressure.

2. The method according to claim 1, **characterised in that** the metering flow of the metering device is inversely proportional to changes in the pressure.

3. The method according to any one of claims 1 to 2, **characterised in that** a plurality of metering devices are controlled or regulated simultaneously according to a method as specified in claims 1 to 2.

## Revendications

1. Procédé de réglage des quantités d'apport pour malaxeur de moulage par injection, dans lequel plusieurs additifs sont acheminés dans le malaxeur de moulage par injection comportant
- une unité de plastification présentant une vis de plastification rotative,
- un agrégat d'injection et
- un dispositif de dosage pour l'acheminement des additifs,
**caractérisé en ce que**
la pression dans la tête de l'unité de plastification est déterminée et que le dispositif de dosage marche en fonction de la pression.

2. Procédé selon la revendication 1,
**caractérisé en ce que**
le courant de dosage du dispositif de dosage change proportionnellement aux changements de pression.

3. Procédé selon une des revendications 1 à 2,
**caractérisé en ce que**
plusieurs dispositifs de dosage sont contrôlés ou réglés en même temps suivant un procédé tel que cité dans les revendications 1 à 2.
